Europäisches Patentamt

European Patent Office

Office européen des brevets

(11) Numéro de publication : **0 345 102 B1**

(12) **FASCICULE DE BREVET EUROPEEN**

(45) Date de publication du fascicule du brevet :
26.02.92 Bulletin 92/09

(51) Int. Cl.⁵ : **B60T 11/26, B65D 47/02**

(21) Numéro de dépôt : **89401117.0**

(22) Date de dépôt : **21.04.89**

(54) **Bouchon de réservoir.**

(30) Priorité : **31.05.88 FR 8807241**

(43) Date de publication de la demande :
**06.12.89 Bulletin 89/49**

(45) Mention de la délivrance du brevet :
**26.02.92 Bulletin 92/09**

(84) Etats contractants désignés :
**DE ES FR GB IT**

(56) Documents cités :
**WO-A-84/01546**
**DE-B- 1 249 759**
**FR-A- 2 055 597**

(73) Titulaire : **BENDIX EUROPE Services
Techniques S.A.
126 rue de Stalingrad
F-93700 Drancy (FR)**

(72) Inventeur : **Picot, Pascal
Bendix France S.A. 126 Rue de Stalingrad
F-93700 Drancy (FR)**
Inventeur : **Demeautis, Chantal
Bendix France S.A. 126 Rue de Stalingrad
F-93700 Drancy (FR)**

## Description

La présente invention se rapporte aux bouchons de réservoir et, plus particulièrement, à un tel bouchon pour un réservoir de fluide d'un maître-cylindre associé à un circuit de freinage d'un véhicule.

Lors de la fabrication d'une voiture, le circuit de freinage est mis en place, puis ce circuit est vidé de son air, puis empli de fluide hydraulique. En règle générale, ces opérations se font par le réservoir de fluide du maître-cylindre et nécessitent l'enlèvement préalable du bouchon de réservoir qui est ensuite remis après l'emplissage. Cette série de manoeuvres ne se prête pas à la fabrication en chaîne d'une voiture où les opérations sont de plus en plus fréquemment effectuées par machine. Par ailleurs, les constructeurs d'automobiles souhaitent pouvoir effectuer l'emplissage du circuit de freinage d'une façon simple et automatisée.

On connaît du document WO-A- 84/01546 un système de connexion entre un réservoir disposé sur un véhicule, et un conteneur où est stocké le liquide, les deux récipients comportant des appendices complémentaires permettant une liaison étanche avec un détrompage évitant le remplissage du réservoir avec un autre conteneur que celui prévu.

Selon ce document, le réservoir peut comporter en particulier un tube saillant à l'extérieur, prévu pour pénétrer dans un orifice du container et pousser un opercule, permettant ainsi la transmission du fluide de l'un à l'autre.

La présente invention n'est pas orientée sur le détrompage pour éviter des mélanges indésirables de liquides comme dans le document pré-cité, mais propose un bouchon de réservoir pour liquide de frein permettant un emplissage rapide sans démontage et comportant un passage de mise à l'air libre, et un moyen de valve disposé dans l'axe dudit bouchon.

Selon l'invention, le moyen de valve comprend un clapet se déplaçant axialement à l'encontre d'un ressort rappelant le clapet en position de fermeture, au moyen de guides périphériques ménagés dans le moyen de valve. L'invention concerne également le dispositif d'emplissage correspondant.

D'autres caractéristiques et avantages de la présente invention ressortiront de la description suivante d'un mode de réalisation donné à titre d'exemple faite en relation avec le dessin annexé, sur lequel :
– la Figure 1 est une vue en coupe longitudinale d'un bouchon de réservoir selon l'invention ; et
– la Figure 2 est une vue analogue du bouchon de la Figure 1 lors du remplissage du réservoir.

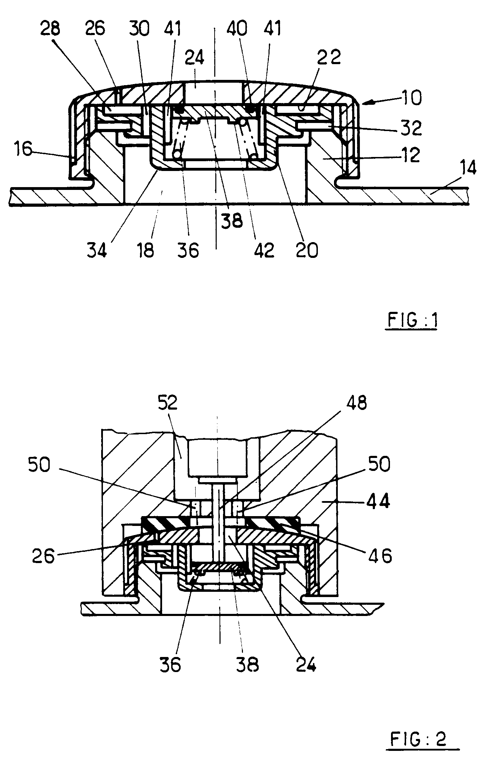

Comme représenté sur la Figure 1, un bouchon de réservoir 10 est monté sur une paroi annulaire 12 d'un corps de réservoir 14 par un filetage 16, la paroi annulaire définissant une ouverture de remplissage 18 dans le réservoir 14. Le bouchon 10 comprend une partie intérieure 20 qui est sensiblement annulaire et qui est montée fixe sur la surface intérieure 22 du bouchon 10. Le bouchon comporte un orifice de remplissage 24 qui est sensiblement circulaire et une ouverture 26 qui mène à un passage d'air 28 qui communique avec l'intérieur du réservoir 14. Le passage d'air 28 peut avantageusement comprendre un moyen de chicane 30 afin d'empêcher la sortie du fluide hydraulique lorsque le véhicule, sur lequel est monté le réservoir, subit un cahot. L'étanchéité entre le bouchon 10 et la paroi annulaire 12 est assurée par un joint annulaire 32 en matière élastomère. La partie intérieure 20 comporte un bord annulaire 34 sur lequel est monté une extrémité d'un ressort 36. L'autre extrémité du ressort 36 vient en appui sur la surface inférieure d'un élément de clapet 38 qui est sensiblement circulaire et dont le diamètre est plus important que celui de l'orifice de remplissage 24. L'élément de clapet 38 comporte un joint annulaire 40 avoisinant sa périphérie. Afin d'assurer que l'élément de clapet 38 reste coaxial avec l'orifice de remplissage 24, la partie intérieure 20 comporte des nervures espacées 41. L'extrémité du ressort 36 est centrée sur la surface inférieure de l'élément de clapet 38 par une butée annulaire 42.

Dans la position de repos représentée Figure 1, l'orifice de remplissage 24 est fermé par l'élément de clapet 38 sous l'effet du ressort 36. L'étanchéité est assurée par le joint annulaire 40.

Sur la Figure 2 est représenté le bouchon de réservoir 10 lors d'un remplissage du réservoir 14 avec du fluide hydraulique. Une tête de remplissage 44 est disposée autour du bouchon de réservoir 10 et comporte un joint annulaire 46 qui assure l'étanchéité entre les deux et, de plus, ferme l'ouverture 26. La tête de remplissage 44 comporte une tige de poussée 48 disposée coaxialement avec l'élément de clapet 38 et a une longueur telle que, lors d'une mise en place de la tête de remplissage 44 autour du bouchon de réservoir 10, elle déplace l'élément de clapet 38 à l'encontre du ressort 36 et ouvre ainsi l'orifice de remplissage 24. La tête de remplissage 44 comprend des ouvertures 50 qui communiquent avec un passage de fluide 52 qui mène à une source de vide et une source de fluide sous pression (non représentées). Quand la tête de remplissage 44 est en place sur le bouchon de réservoir 10 le vide du circuit est effectué, puis une quantité prédéterminée de fluide hydraulique est envoyée par le passage 52 et l'orifice de remplissage 24 vers l'intérieur du réservoir 14. Quand le remplissage est terminé la tête de remplissage 44 est retirée et l'élément de clapet 38 vient fermer l'orifice de remplissage 24 sous l'effet du ressort 36.

Ainsi l'emplissage du réservoir lors de la fabrication du véhicule en chaîne est rendu simple et facile par le bouchon de réservoir conforme à la présente invention. Le bouchon de réservoir permet également au particulier d'ajouter facilement du fluide hydraulique quand cela est nécessaire en se servant d'un bidon de fluide dont l'élément de fermeture comprend les constituants essentiels, joint et tige de poussée, de la tête de remplissage. Evidemment, il est toujours possible de remplir le réservoir en dévissant simplement le bouchon de réservoir.

Il est possible de prévoir, au lieu de monter le bouchon sur le réservoir par un filetage, de le monter par encliquetage ou de le former d'une pièce avec le réservoir.

Il est également possible d'incorporer la tête de remplissage 44 sur un conteneur de fluide hydraulique.

## Revendications

1. Bouchon (10) de réservoir pour liquide de frein permettant un emplissage rapide sans démontage, comportant un passage (28) de mise à l'air libre, et un moyen de valve disposé dans l'axe dudit bouchon (10), caractérisé en ce que ledit moyen de valve comprend un clapet (38) se déplaçant axialement à l'encontre d'un ressort (36) rappelant ledit clapet (38) en position de fermeture, au moyen de guides périphériques (41) ménagés dans ledit bouchon (10).

2. Bouchon de réservoir suivant la revendication 1 caractérisé en ce que le clapet (38) est pourvu d'un joint annulaire (40) assurant son étanchéité par rapport au corps du bouchon, en position de repos.

3. Dispositif d'emplissage d'un réservoir pourvu d'un bouchon selon l'une des revendications 1 et 2 comprenant une tige (48) faisant saillie dans l'axe dudit bouchon (10) et prévue pour pousser le dit clapet (38) en position d'ouverture, caractérisé en ce qu'il comporte un moyen d'étanchéité (46) pour obturer ledit passage (28) de mise à l'air libre prévu sur le bouchon.

## Claims

1. Reservoir cap (10) for brake fluid, permitting rapid filling without dismounting, having a passage (28) for communication with the open air, and a valve means disposed on the same axis as the said cap (10), characterised in that the said valve means comprises a valve member (38) which moves axially against the action of a spring (36) which returns the said valve member (38) to the closed position by means of peripheral guides (41) formed in the said cap (10).

2. Reservoir cap according to Claim 1, characterised in that the valve member (38) is provided with an annular seal (40) ensuring its leaktightness with respect to the body of the cap, in the position of rest.

3. Device for filling a reservoir provided with a cap according to either of Claims 1 and 2, comprising a rod (48) projecting on the same axis as the said cap (10) and intended to push the said valve member (38) into the open position, characterised in that it has a sealing means (46) in order to obturate the said passage (28) for communication with the open air, provided on the cap.

## Patentansprüche

1. Verschluß (10) für einen Bremsflüssigkeitsbehälter, wobei der Verschluß ein schnelles Einfüllen ohne Demontage ermöglicht und einen Durchlaß (28) für eine Verbindung ins freie und ein auf der Mittelachse des Verschlusses (10) angeordnetes Ventilmittel aufweist, dadurch gekennzeichnet, daß das Ventilmittel eine Klappe (38) aufweist, die sich mittels im Verschluß (10) ausgebildeter peripherer führungen (41) gegen die die Klappe (38) in die geschlossene Position zurückstellende Kraft einer feder (36) verschiebt.

2. Behälterverschluß gemäß Anspruch 1, dadurch gekennzeichnet, daß die Klappe (38) mit einer Ringdichtung (40) versehen ist, die in der Ruheposition ihre Dichtheit gegenüber dem Verschlußkörper gewährleistet.

3. Vorrichtung zum Auffüllen eines Behälters, der mit einem Verschluß gemäß einem der Ansprüche 1 und 2 versehen ist, mit einem Stift (48), der längs der Mittellinie des Verschlusses (10) hervorsteht und dazu vorgesehen ist, die Klappe (38) in die geöffnete Position zu schieben, dadurch gekennzeichnet, daß sie ein Dichtungsmittel (46) aufweist, um den am Verschluß vorgesehenen Durchlaß (28) für die Verbindung ins freie zu verschließen.

EP 0 345 102 B1

FIG : 1

FIG : 2

4